# EUROPÄISCHE PATENTSCHRIFT

(11) **EP 3 136 565 B1**
(45) Veröffentlichungstag und Bekanntmachung des Hinweises auf die Patenterteilung: **12.08.2020**
(21) Anmeldenummer: 16185599.4
(22) Anmeldetag: 25.08.2016
(51) Int. Cl.: H02K 21/24, H02K 1/27, H02K 15/03

(54) **FASER-VERBUND-KUNSTSTOFF-ROTOR FÜR EINE TRANSVERSALFELD-ERREGTE ELEKTRISCHE MASCHINE UND EIN VERFAHREN ZU SEINER HERSTELLUNG**
FIBER COMPOSITE PLASTIC ROTOR FOR A TRANSVERSE FIELD EXCITED ELECTRIC MACHINE AND A METHOD FOR PRODUCING THE SAME
ROTOR COMPOSITE FIBRE/PLASTIQUE POUR UNE MACHINE ELECTRIQUE A EXCITATION DE CHAMP TRANSVERSAL ET SON PROCEDE DE FABRICATION

(30) Priorität: 25.08.2015 DE 102015114041
(43) Veröffentlichungstag der Anmeldung: 01.03.2017
(73) Patentinhaber: Schmuhl Faserverbundtechnik GmbH & Co. KG, 07368 Liebschütz (DE)
(72) Erfinder: ZILLER, Michael, 07607 Hainspitz (DE); SCHMUHL, Markus, 07338 Drognitz (DE); SCHMUHL, Klaus-Peter, 07368 Liebschütz (DE)
(74) Vertreter: Freitag, Joachim

(56) Entgegenhaltungen:
- EP-A1- 2 773 023
- AT-U1- 13 246
- DE-A1-102010 039 123
- DE-U1-202012 012 228

## Beschreibung

Die Erfindung betrifft einen Faser-Verbund-Kunststoff-Rotor für eine transversalfeld-erregte elektrische Maschine und ein Verfahren zur Herstellung eines solchen Rotors, insbesondere für eine Transversalfluss-Reluktanzmaschine oder für eine permanentmagnetisch erregte elektrische Maschine.

Der allgemeine Trend zur Elektromobilität steigert die Nachfrage nach möglichst einfach integrierbaren elektrischen Antrieben. Um hohe Reichweiten bzw. einen geringen Energieverbrauch zu erzielen ist stets auch der Wirkungsgrad von Bedeutung, der sich jedoch je nach dem Funktionsprinzip der verschiedenen elektrischen Antriebe deutlich unterscheiden kann. Unabhängig vom Funktionsprinzip der Antriebe wirkt sich die Verwendung möglichst leichter Materialien, insbesondere zur Reduzierung von bewegten Massen, prinzipiell positiv auf den Wirkungsgrad aus. Zur Gewichtsreduzierung eignen sich beispielsweise faserverstärkter Kunststoffe, die gleichzeitig leicht und sehr stabil sein können.

Aus der Offenlegungsschrift EP 2 747 256 A1 ist ein Verfahren zur Herstellung eines Rotors für einen Elektromotor bekannt. Der Rotor ist aus einem Faser-Kunststoff-Verbundwerkstoff gefertigt und besitzt eine scheibenförmige Geometrie. In der scheibenförmigen Geometrie des Rotors werden eine Vielzahl von Magneten aufgenommen, die gleichmäßig und äquidistant zur Rotorachse angeordnet sind. Das in einem ersten Verfahrensschritt hergestellte Fasergerüst des Rotors besteht aus einem schraubenförmig gewebten Faserband, das bis zur erforderlichen Dicke des Rotors, in mehreren Lagen schraubenförmig übereinander abgelegt werden kann. Die Gewebestruktur des Faserbands setzt sich aus schraubenförmig nebeneinanderliegende Kettfasern und rechtwinklig zu den Kettfasern eingewebten Schussfasern zusammen. Zur Stabilisierung des Rotors am inneren und äußeren Randbereich werden die Kettfasern am Rand des Faserbands dichter angeordnet als im Mittenbereich des Faserbands. Für die spätere Aufnahme der Magneten können durch Zusammenschieben von Schussfasern Öffnungen im Faserband erzeugt werden, die nach dem schraubenförmig Übereinanderablegen entsprechende Aussparungen bilden. Eine weitere Möglichkeit ist, dass diese Öffnungen bereits in das Faserband eingewebt werden. Das Faserband wird in einem weiteren Verfahrensschritt in eine Kavität eingelegt, die der Negativform des Rotors entspricht. Zur Ausbildung der Aussparungen für die Magneten, weist die Kavität eine entsprechende Anzahl von Platzhaltern auf, die in die Öffnungen des Faserbands eingreifen. Als Platzhalter können die Magnete verwendet werden, die im folgenden Verfahrensschritt zusammen mit dem Fasergerüst in einer Polymermatrix eingegossen und unter Druck- und Temperaturerhöhung ausgehärtet werden.

Die Schraubenform des gewebten Faserbands führt jedoch zu einer unvorteilhaften Verteilung der Schussfasern in der Gewebestruktur des Rotors. Durch das quadratisch mit dem Durchmesser zunehmende Volumen des Scheibenrotors, nimmt eine am Innendurchmesser des Faserbands bestehende optimale, dichte Anordnung der Schussfasern zum Außendurchmesser hin sehr stark ab. Aufgrund der mechanischen Belastung des Rotors durch schnell wechselnde Felder oder hohe Drehzahlen wird aber genau im Randbereich eines Scheibenrotors die größte Stabilität benötigt. Das Faservolumen kann auch nicht weiter gesteigert werden, da die am Innendurchmesser konzentrierten Schussfasern den Rotor verdicken würden. Weiterhin ist es nach dem bekannten Stand der Technik nicht möglich, die radialen Fasern exakt gerade auszurichten. Diese weisen immer einen Kurvenverlauf auf, so dass die Leistungsfähigkeit des Verbundes negativ beeinträchtigt wird.

In der EP 2 773 023 A1 ist ein Axialflussmotor beschrieben, bei dem an einem ringförmigen Grundkörper in axialer Richtung die Magnete angebondet und in einem Kunststoffkomposit eingebettet sind, wobei der gesamte Rotor mit einer torusförmigen Glasfaserwicklung überwickelt ist, um seine mechanische Stabilität bei hohen Drehzahlen zu gewährleisten. Dabei hat das in einer Kunststoffschicht fixierte Fasermaterial den Nachteil das es lediglich als umschließende, nicht dehnungsfreie Bandage wirkt, die Magnethalterung selbst aber nicht faserverstärkt bewehrt ist.

Der Erfindung liegt die Aufgabe zugrunde, eine neue Möglichkeit zur Herstellung eines Faser-Verbund-Kunststoff-Rotors für elektrische Maschinen zu finden, die einen modularen scheibenförmigen Aufbau des Rotors mit passgenauen Aussparungen für die zuverlässige Positionierung und Fixierung der magnetischen Funktionselemente und deren zuverlässige Fliehkraftsicherung insbesondere im Randbereich des Faser-Verbund-Kunststoffs gestattet.

Erfindungsgemäß wird gemäß des Anspruchs 1 die Aufgabe bei einem Faser-Verbund-Kunststoff-Rotor für eine elektrische transversalfeld-erregte Maschine unter Verwendung mindestens einer Faser-Verbund-Kunststoff-Schicht, in der radial ausgerichtete magnetische Funktionselemente eingebettet sind, dadurch gelöst, dass der Rotor mindestens eine rotationssymmetrische Rotorscheibe aufweist, die als Faser-Verbund-Kunststoff-Schichtsystem gefertigt ist, dass die Rotorscheibe aus transversal orientierten, symmetrisch zu einer Symmetrieebene angeordneten Schichten aufgebaut ist und die mindestens eine Faser-Verbund-Kunststoff-Schicht eine zweidimensional strukturierte Trägerschicht mit vorwiegend tangential orientierten Fasern aufweist, an der wenigstens eine daran anliegende radiale Verstärkerschicht mit mindestens einer radial geradlinigen Faserausrichtung vorhanden ist, dass die Verstärkerschicht an radiale Stege zwischen den Funktionselementen angepasste flache radiale Faserspeichen aufweist, die von einem freigelassenen Innenkreis bis an die Peripherie der Trägerschicht ausgedehnt sind, und dass mindestens eine Positionierschablone zur definierten Positionierung der Funktionselemente sowie radial geordneten Einlagerung der Faserspeichen der Verstärkerschicht in die Stege zwischen den Funktionselementen mindestens transient vorhanden ist, um die Funktionselemente und die Faserspeichen wenigstens so lange definiert zu fixieren, bis ein zwischen die Fasern von Trägerschicht und Verstärkerschicht eingebrachtes fließfähiges Matrixmaterial ausgehärtet ist.

Vorteilhaft ist die Verstärkerschicht als radial verstärktes Fasergewebe ausgebildet, das bevorzugt radial geradlinig ausgebildete Fasern aufweist und vorzugsweise vorgestreckt ist.

Die Positionierschablone besteht zweckmäßig aus einem elektrisch nichtleitenden Material. Sie kann vorzugsweise aus mindestens einem polymeren Kunststoff oder aber aus einer Oxidkeramik, insbesondere Aluminiumoxid, bestehen.

Des Weiteren erweist es sich als vorteilhaft, dass die Positionierschablone am freigelassenen Innenkreis oder an einem äußeren Randbereich einen axial eingesenkten Montagering aufweist, der zur Justierung von Positionierschablonen untereinander und der Rotorscheibe mit einer Motorwelle Durchbrüche für Befestigungselemente aufweist.

Die magnetischen Funktionselemente sind zweckmäßig in radialer Ausrichtung in Ausnehmungen eingesetzt, die in axialer Richtung alle Faser-Verbund-Kunststoff-Schichten der Rotorscheibe mindestens überwiegend durchdringen.
Sie weisen vorzugsweise in radialer Richtung orientierte Pole auf, die entweder aus temporär oder dauerhaft magnetisierbaren oder permanentmagnetischen Materialien gebildet sind.

Ferner können die magnetischen Funktionselemente zwischen den Polen vorteilhaft ein elektrisch nichtleitendes Zwischenstück zur Poltrennung aufweisen.
In einer bevorzugten Ausführung weist die Rotorscheibe eine Symmetrieebene in der Mitte der Trägerschicht auf und in einer weiteren vorteilhaften Ausführung liegt eine Symmetrieebene entlang einer Fügefläche zweier rückseitig zusammengefügten Positionierschablonen.
Die Rotorscheibe ist ausgehend von einer zentral angeordneten Trägerschicht zweckmäßig beidseitig jeweils mit einer Verstärkerschicht und einer Positionierschablone einschlössen.
Ferner weist die Rotorscheibe ausgehend von der Symmetrieebene zwei Positionierschablonen auf, die beidseitig von einer Verstärkerschicht und einer Trägerschicht eingeschlossen sind.

Des Weiteren wird die Aufgabe durch ein Verfahren zur Herstellung eines Faser-Verbund-Kunststoff-Rotors gemäß des Anspruchs 9 gelöst, das folgende Schritte enthält:
a) Bereitstellen mindestens einer Positionierschablone mit passenden Ausnehmungen für magnetische Funktionselemente und eingeformten abgesenkten Stegen zur Aufnahme von radialen Faserspeichen,
b) Einbringen der Funktionselemente in die Ausnehmungen der Positionierschablone,
c) Einbringen von Fasern zu radialen Faserspeichen in Bereiche der Stege der Positionierschablone zwischen den Funktionselementen zur Erzeugung einer radialen Verstärkerschicht an der Positionierschablone,
d) Anlegen mindestens einer Trägerschicht aus zweidimensional strukturiertem Fasermaterial, das Ausnehmungen für die Funktionselemente aufweist, an die mit den Verstärkerschichten belegten Positionierschablonen,
e) Zusammenfügen eines symmetrischen Schichtaufbaus aus mindestens einer Positionierschablone, wenigstens einer Trägerschicht und mindestens einer Verstärkerschicht, wobei entweder die Trägerschicht oder die Positionierschablone in einer Symmetrieebene der Rotorscheibe liegt, die Verstärkerschicht und die Trägerschicht direkt aufeinanderfolgend positioniert sind und die radialen Faserspeichen der Verstärkerschicht zusammen mit den magnetischen Funktionselementen in der Positionierschablone für eine genaue Lageausrichtung aufgenommen werden, sodass bezüglich einer Symmetrieebene Verstärkerschichten jeweils zwischen Trägerschicht und Positionierschablone angeordnet sind, und
f) Einbringen eines fließfähigen, aushärtbaren Matrixmaterials in alle Faserschichten der Rotorscheibe, während diese in einer axial pressbaren Werkzeugkavität liegt, und Erzeugung einer Faser-Kunststoff-Verbund-Rotorscheibe durch Aushärten des Matrixmaterials.

Bevorzugt werden zwei Positionierschablonen (24), die jeweils mit magnetischen Funktionselementen (3), radialen Faserspeichen (221) und einer Trägerschicht (21) versehen werden, spiegelsymmetrisch invers zusammengefügt.

Vorteilhaft erfolgt das Einbringen der radialen Faserspeichen in Bereiche der Stege zwischen den Funktionselementen durch Einlegen von vorgefertigten Radialfaserelementen oder durch direktes radiales Ablegen der Fasern.

In einer anderen Variante kann das Einbringen der radialen Faserspeichen in Bereiche der Stege zwischen den Funktionselementen durch radiales Ablegen von einzelnen Fasern, Faserbündeln oder von vorgefertigten Radialfaserelementen mit einer aus den Technologien Legen, Wickeln oder Tapelegen erfolgen.
Das Durchtränken aller auf den Positionierschablonen gestapelten Schichten mit dem Matrixmaterial erfolgt vorzugsweise in einer geschlossenen Werkzeugkavität mittels eines Druckgradientenverfahrens, bei dem ein Druckgefälle vom Reservoir des Matrixmaterials zur Werkzeugkavität ausgenutzt wird, um die Faserzwischenräume vollständig auszufüllen. Vorzugsweise wird das Matrixmaterial durch Gießen oder Injizieren von flüssigem oder verflüssigtem polymerem Kunststoff als Gemisch aus Harz und Härter oder Schmelze zwischen die Fasern der auf den Positionierschablonen liegenden Träger- und Verstärkerschichten in die Werkzeugkavität eingebracht.
In einer anderen vorteilhaften Variante erfolgt das Durchtränken mit dem Matrixmaterial durch Verflüssigen von polymerem Kunststoff, der in den auf den Positionierschablonen liegenden Fasern der Träger- und Verstärkerschichten nach dem Prepreg-Verfahren vorimprägniert war, durch Heißpressen in der Werkzeugkavität.
Es erweist sich als zweckmäßig, wenn nach dem Aushärten des Matrixmaterials ein Teil der Positionierschablonen durch Planschleifen, -drehen oder -fräsen abgetragen wird. Ferner ist es von Vorteil, dass die Rotorscheibe abschließend tangential mit einer Bandage ummantelt wird, die als Faser-Verbund-Kunststoff-Schicht mit tangential verlaufenden Fasern erzeugt wird.

Die Erfindung basiert auf der Grundüberlegung, dass beim bekannten Verfahren der schraubenförmigen Herstellung eines gewebten Faserbandes eine unvorteilhafte Verteilung der Fasern in der Gewebestruktur des Rotors durch das quadratisch mit dem Durchmesser zunehmende Volumen des Scheibenrotors zustande kommt. Auch durch eine erhöhte Kettfaserdichte in den Randbereichen des Faserbandes ist keine ausreichende Kompensation der nach außen abnehmenden Dichte radialer Fasern insbesondere für den Faserband-Mittenbereich möglich, der durch die Ausnehmungen für die Magnetwerkstoff-Elemente nur schmale Stege aufweist.

Gemäß der Erfindung wird dieses Problem gelöst, indem eine modulare Rotorscheibe als mehrlagiger rotationssymmetrischer Schichtaufbau aus Fasern in einem Verbund mit einem biologisch oder chemisch erzeugten Matrixmaterial (z. B. Kunststoffmatrix) aufgebaut ist.

Die modular aufgebaute Rotorscheibe wird hergestellt, indem in einer nichtleitenden Positionierschablone (vorzugsweise aus Kunststoff, Keramik oder einem anderen leicht formbaren Material, das sich für Prägeformung, Spritzgussherstellung o.Ä. eignet) zur genauen Positionierung der magnetischen Funktionselemente der Rotorscheibe eine radiale Verstärkerschicht aus angepasst dimensionierten Tragfasern mit überwiegend radialer Faserausrichtung als flache Faserspeichen in den Stegbereichen zwischen den Funktionselementen der Rotorscheibe und eine Trägerschicht aus überwiegend elektrisch nichtleitendem Material (Thermoplast oder Duroplast mit Faserverstärkung, d.h. Faserverbundwerkstoff) zur Stabilisierung der radialen Faserspeichen der Verstärkerschicht mit einem Kunststoff zu einer Faserverbundmatrix zusammengefügt werden. Dabei können die in der Trägerschicht überwiegend vorhandenen tangential verlaufenden Fasern elektrisch leitend (z.B. Kohlefasern), vorzugsweise jedoch elektrisch nicht leitend (z.B. Glasfaser, Aramidfaser, Basaltfaser) ausgebildet sein, sofern das für die radialen Fasern der Verstärkerschicht zur Stabilisierung förderlich ist und solange in tangentialer Richtung innerhalb der Faserverbund-Trägerschicht kein umlaufend geschlossener Leiter aufgebaut wird, wobei der für die Faserverbundmatrix verwendete Werkstoff in jedem Fall für den insgesamt elektrisch nichtleitenden Charakter der Trägerschicht verantwortlich ist.

Der Rotorschichtaufbau wird grundsätzlich symmetrisch gewählt, wobei es prinzipiell beliebig ist, ob die Trägerschicht oder die Positionierschablone(n) in der Symmetrieebene der Rotorscheibe liegen, solange die Verstärkerschicht und die Trägerschicht direkt aufeinanderfolgend positioniert sind und die Positionierschablone die radialen Faserelemente der Verstärkerschicht zusammen mit den magnetischen Funktionselementen für eine genaue Lageausrichtung aufnehmen kann. Dabei kann es auch als zur Erfindung gehörig betrachtet werden, wenn die magnetischen Funktionselemente bereits in einem vorgelagerten Positionierschritt direkt in die Positionierschablone eingegossen worden sind. Unter den oben erwähnten magnetischen Funktionselementen sollen gemäß der Erfindung sowohl magnetisierbare Pole mit einem elektrisch nichtleitenden Verbindungsstück zur radialen Poltrennung, wobei die Pole aus einem dauerhaft oder temporär magnetisierbaren Werkstoff, wie z.B. gepressten, weichmagnetischen Kompositmaterialien, Sintermetallen oder Elektroblech bestehen, als auch permanentmagnetische Pole verstanden werden.

Die Trägerschicht wird mit mindestens tangential bevorzugter Faserausrichtung vollflächig um die Ausnehmungen für die Funktionselemente abgelegt und eine weitere radiale Verstärkerschicht, gegebenenfalls unter Verwendung einer weiteren spiegelsymmetrisch aufgelegten Positionierschablone, auf die ersten zwei Faserschichten aufgebracht und der so entstehende Schichtaufbau wird mit einem thermoplastischen oder duroplastischen Kunststoff getränkt, injiziert, vergossen oder verpresst, wobei diese geeigneten Methoden verallgemeinert als Druckgradientenverfahren zusammengefasst sein sollen, wobei ein Druckgefälle (eine Druckdifferenz) vorherrscht zwischen einem Reservoir des Matrixmaterials und einer Kavität, in der das Fasermaterial eingebracht ist, um ein Durchtränken des Fasermaterials der Faserschichten zu erreichen. Dabei sollen unter Druckgradientenverfahren alle Verfahren verstanden werden, bei denen die Kavität für die Fasern unter Normaldruck verbleibt und das Reservoir des Matrixmaterials mit erhöhtem Druck beaufschlagt wird, oder bei denen in der Kavität ein Unterdruck (Vakuum) erzeugt und das Matrixmaterial unter Normaldruck gehalten wird, oder auch Verfahren mit Evakuierung der Kavität und Druckbeaufschlagung des Matrixmaterials.

Zur Unterdrückung von Wirbelstromeffekten, die zur Senkung des Wirkungsgrades der elektrischen Maschine durch Erwärmung führen würden, sind in den radialen Verstärkerschichten radial verlaufende, vorzugsweise elektrisch leitfähige Fasern eingebracht, die zumindest bereichsweise zwischen den Funktionselementen tangential voneinander separiert sind.

Durch die Erfindung wird eine Möglichkeit zur Herstellung eines Faser-Verbund-Kunststoff-Rotors für elektrische Maschinen aufgezeigt, die einen modularen scheibenförmigen Aufbau eines Rotors mit passgenauer Positionierung der magnetischen Funktionselemente und deren zuverlässige Fliehkraftsicherung insbesondere im Randbereich des Faser-Verbund-Kunststoffs gestattet. Dabei wird insbesondere eine belastungsorientierte Verteilung der Fasern in einem Verbundmatrixmaterial bei moderatem Herstellungsaufwand erzielt und eine modulare passgenaue Konfektionierung von anwendungsspezifischen Rotoren elektrischer Maschinen ermöglicht.

Die Erfindung wird nachfolgend anhand von Ausführungsbeispielen und Abbildungen näher erläutert. Dabei zeigen:
- Fig. 1:: eine perspektivische Darstellung einer Rotorscheibe als Modul eines erfindungsgemäßen Faser-Verbund-Kunststoff-Rotors,
- Fig. 2:: eine erste Ausführungsform der Positionierschablone zur Positionierung der Ausnehmungen für die magnetischen Funktionselemente und die angepasste Erzeugung der ersten radialen Verstärkerschicht mit flachen Faserspeichen,
- Fig. 3:: eine bevorzugte Ausführung der ersten Verstärkerschicht als sektorförmige Faserspeichen auf vorgegebenen Stegen der Positionierschablone,
- Fig. 4:: eine Darstellung eines Sektorausschnitts vor dem Zusammensetzen der Rotorscheiben mit einer mindestens bevorzugt tangential faserverstärkten Trägerschicht als Hauptschicht der modular aufgebauten Rotorscheibe,
- Fig. 5:: eine schematische Darstellung der ersten Ausführung der erfindungsgemäßen Rotorscheibe des modular aufgebauten Faser-Verbund-Kunststoff-Rotors in einer perspektivischen Ansicht eines sektorförmigen Ausschnitts,
- Fig. 6:: eine abgewandelte Darstellung der in Fig. 5 gezeigten Ausführung der erfindungsgemäßen Rotorscheibe des modular aufgebauten Faser-Verbund-Kunststoff-Rotors als ein sektorförmiger Ausschnitt,
- Fig. 7a:: eine schematische Darstellung einer ersten Rotorscheibe des modular aufgebauten Faser-Verbund-Kunststoff-Rotors in einer perspektivischen Draufsicht,
- Fig. 7b:: eine schematische Darstellung der Ausführung gemäß Fig. 7a in einer Axialschnittebene A - A,
- Fig. 7c:: eine schematische Darstellung der Ausführung gemäß Fig. 7a in einer Axialschnittebene B - B durch eine Ausnehmung ohne eingesetztes Funktionselement,
- Fig. 8:: eine schematische Darstellung der Rotorscheibe als schichtweise spiegelsymmetrisch zusammengefügter Ausschnitt der Rotorscheibe gemäß der ersten Ausführung von Fig. 7a mit dargestellten Faser-Verbund-Kunststoff-Schichten und zugehörigen Positionierschablonen,
- Fig. 9:: eine schematische Darstellung der Rotorscheibe als schichtweise abgestufter Schnitt eines Sektors der Rotorscheibe gemäß der ersten Ausführung von Fig. 7a mit dargestellten Faser-Verbund-Kunststoff-Schichten sowie zentral aneinander liegenden Positionierschablonen und einer vergrößerten Detaildarstellung der zusammengesetzten Schichtenfolge,
- Fig.10: eine stilisierte Darstellung zweier erfindungsgemäßer Positionierschablonen, die auch einstückig hergestellt sein können, mit eingegossenen oder eingesetzten magnetischen Funktionselementen, wobei die abgesenkten Bereiche der Rotorscheibe zur Aufnahme der radialen Verstärkerschichten beidseitig zu einer Symmetrieebene gegenüberliegend angeordnet sind,
- Fig.11:: eine Schnittdarstellung des erfindungsgemäßen Rotors mit einer Rotorscheibe, die Faser-Verbund-Kunststoff-Schichten gemäß Fig. 5 oder 9 aufweisen kann, eingesetzt in einem Motorgehäuse mit H-förmigen Polpaaren, die beidseitig mit einem schmalen Luftspalt zur Rotorscheibe angeordnet sind, wobei die Rotorscheibe an einer innen liegenden Hohlwelle befestigt ist,
- Fig. 12:: eine Schnittdarstellung des erfindungsgemäßen Rotors mit mehreren separaten Rotorscheiben in einem Motorgehäuse mit H-förmigen Polpaaren jeweils zwischen zwei Rotorscheiben und U-förmigen Polpaaren an den äußeren Rotorscheiben,
- Fig. 13:: eine Schnittdarstellung, in der die erfindungsgemäße Rotorscheibe in einem Motorgehäuse befestigt ist und den Rotor an einer äußeren Welle (Motorgehäuse) bildet, während die Polpaare beiderseits der Rotorscheibe auf einer feststehenden Achse (Stator) angebracht sind.

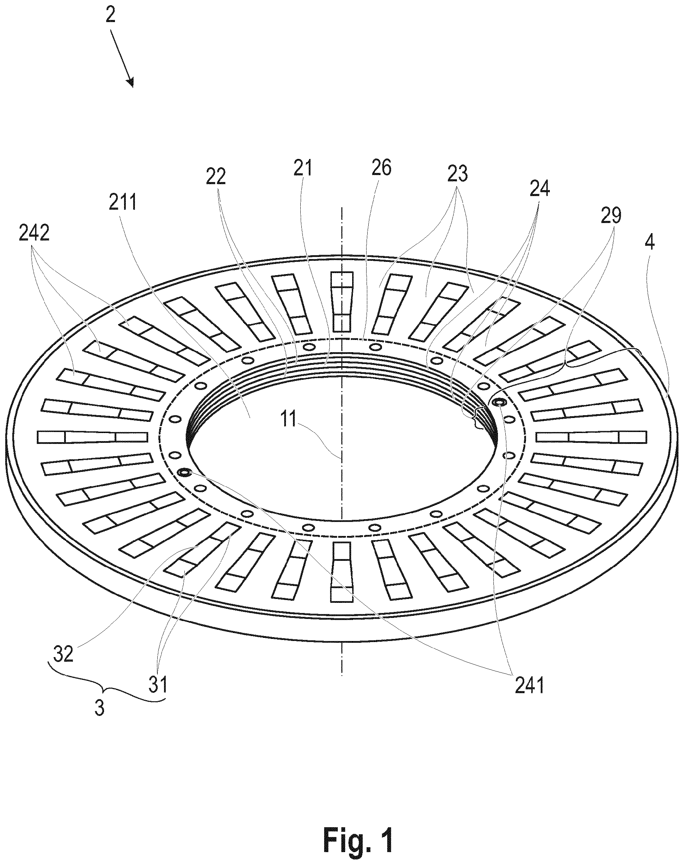

Der grundsätzliche Aufbau eines Motors 1 mit einer erfindungsgemäßen Faser-Verbund-Kunststoff-Rotorscheibe 2 ist durch seine modulare Zusammensetzung aus einem in beliebiger Anzahl und Dichte konfektionierbaren Schichtenaufbau, die Funktionselemente aus permanentmagnetischen oder magnetisierbaren Polen mit einem elektrisch nichtleitenden Verbindungsstück zur radialen Poltrennung oder aus dauerhaft oder temporär magnetisierbarem Werkstoff, wie z. B. gepressten, weichmagnetischen Kompositmaterialien oder Elektroblech, gemäß Fig. 1 geprägt. Die Rotorscheibe 2 hat eine axialsymmetrische Schichtstruktur, die eine Trägerschicht 21 und benachbart mindestens eine radiale Verstärkerschicht 22 aufweist, wobei die Verstärkerschicht 22 zur radial ausgerichteten Faserverstärkung der Trägerschicht 21 jeweils an Stegen 23 zwischen den magnetischen Funktionselementen 3 zur Steifigkeitserhöhung radial ausgerichtet eingebrachte und an auftretende Fliehkräfte angepasst dimensionierte Faserspeichen 221 enthält. Die durch die Stege 23 definiert beabstandeten Funktionselemente 3 bestehen aus radial orientierten Polen 31, die entweder aus permanentmagnetischem oder dauerhaft oder temporär magnetisierbarem Material bestehen und in letzterem Fall ein elektrisch nichtleitendes Verbindungsstück 32 zur radialen Poltrennung aufweisen. Um die Funktionselemente 3 genau zu positionieren und in den dazwischen liegenden Bereichen der Stege 23 die Faserspeichen 221 der radialen Verstärkerschicht 22 definiert einzubringen, ist mindestens eine Positionierschablone 24 vorgesehen, die als Formteil durch Urformung oder Umformung (z.B. Infusions- oder Spritzgussverfahren oder Kombinationen mit Stanzen oder Prägen) oder Frästeil eine Maßverkörperung für die exakte Herstellung der gesamten Rotorscheibe 2 vorgibt. Sie ist aus einem leicht formbaren Kunststoff oder einer Oxidkeramik, vorzugsweise Aluminiumoxid hergestellt. Die Positionierschablone 24 stellt jeweils die Voraussetzung für die präzise Ausrichtung der Funktionselemente 3 um die Motordrehachse 11 und die zuverlässige radiale Faserverstärkung des Faser-Kunststoff-Verbundes dar. Nach dem Einsetzen und Ausrichten der Funktionselemente 3 und Einlegen der Faserspeichen 221 der Verstärkerschicht 22 in eine erste Positionierschablone 24 sowie der Trägerschicht 21 sorgt eine ebenfalls mit einer Verstärkerschicht 22 belegte zweite Positionierschablone 24 für den spiegelsymmetrischen Aufbau in axialer Richtung, wobei entweder die Trägerschicht 21 die Ebene der Spiegelsymmetrie enthält oder die mindestens eine Positionierschablone 24 beidseitig entsprechend geformte Flächen aufweist oder bei zwei einseitig ebenen Positionierschablonen 24 mit aneinanderliegenden ebenen Flächen die Symmetrieebene 27 zwischen den beiden ebenen Flächen der Positionierschablonen 24 liegt.
Für exakte axiale und tangentiale Ausrichtung der symmetrischen Rotorscheibe 2 und gegebenenfalls deren Stapelung in axialer Richtung eines mehrere Rotorscheiben 2 enthaltenden Motors 1 zueinander sind Passstifte oder Justierhülsen 241 in Montagebohrungen 243 in einem Innenring 211 der Positionierschablonen 24 vorgesehen und die so definiert gestapelten Schichten in einem polymeren Matrixmaterial 25 fixiert (Duroplast, z.B. Epoxid, Polyurethan, Polyester, Vinylesther, oder Thermoplast, z. B. Polyamide, Polyetheretherketon, Polyarylsulfone). Die wichtigsten Auswahl-Eigenschaften des Matrixmaterials 25 sind eine hohe Wärmeformbeständigkeit sowie eine hohe Festigkeit.
Die zentrale Trägerschicht 21, die vorzugsweise durch eine isotrope Faserverknüpfung gekennzeichnet ist, aber auch noch zusätzliche Verstärkungen in tangentialer Richtung aufweisen kann, wird als kreisringförmiges Faserhalbzeug mit mittig freigelassenem Innenkreis 211 und vorgefertigten Ausnehmungen 212 für die Funktionselemente 3 in den oben beschriebenen Schichtaufbau eingesetzt.
Die Faserverknüpfung der Trägerschicht 21 sowie der Verstärkerschicht 22 können in ihren beschriebenen Formen durch Flecht-, Strick-, Knüpf-, Wirk-, Tapeablege-, TFP-(Tailored Fiber Placement) oder Webverfahren hergestellt sein, die zusätzlich durch Kunststoffe zu einem mehrlagigen, flexiblen Flächengebilde (Preform) verbunden sein können. Für die Verstärkerschicht 22 sind die Fasern vorzugsweise vorgespannt.

Ist das Matrixmaterial 25 ausgehärtet, können die gegenüberliegenden Oberflächen der Rotorscheibe 2 planparallel geglättet werden. Dabei können die Positionierschablonen 24, wenn diese außen liegen, teilweise oder bis hin zu ihrer vollständigen Entfernung abgetragen werden, da ihr Zweck als Maßhalter oder Maßverkörperung erfüllt ist. Anderenfalls, wenn die Positionierschablone(n) 24 mittig in der Rotorscheibe 2 angeordnet ist, wird an den beidseitig außenliegenden Trägerschichten 21, gebunden mit dem Matrixmaterial 25 - soweit erforderlich - plangeschliffen, um das geometrische Endmaß der Rotorscheibe 2 fertigzustellen.
Abweichend von der Planparallelität kann die Rotorscheibe 2 auch radial nach außen dünner gestaltet werden, wenn man innerhalb der Faser-Verbund-Schichten (insbesondere innerhalb der Verstärkerschicht 22, aber auch in der Trägerschicht 21) den aufbaubedingten radialen Faser-Volumen-Gradienten vermeiden oder zumindest verringern möchte.

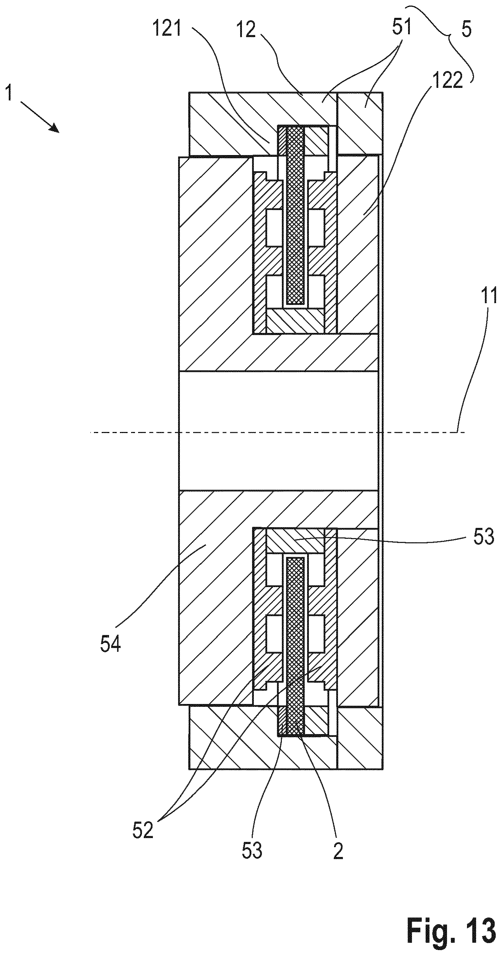

Zur montagefreundlichen Komplettierung der Rotorscheibe 2 kann am freigelassenen Innenkreis 211 der Rotorscheibe 2 ein hochfester Montagering 26 zum Verspannen an der Motorwelle 12 vorgesehen sein, der auch bereits vor dem Einbringen des Matrixmaterials 25 bzw. vor deren Aushärtung eingepasst oder in der Positionierschablone 24 eingeformt sein kann. Die Ausrichtung des Montagerings 26 gegenüber der übrigen Rotorscheibe 2, insbesondere den Funktionselementen 3, erfolgt über die bereits oben erwähnten Justierhülsen 241. Eine alternative Anbringung des Montageringes 26 kann an der Peripherie der Rotorscheibe 2 erfolgen und wird für die Ausführung eines Außenrotors gemäß Fig. 13 benötigt.

Um die Rotorscheiben 2 zusätzlich gegen das Abfliegen von Teilen der Rotorscheibe 2 durch Fliehkräfte bei hohen Drehgeschwindigkeiten zu sichern, werden die Rotorscheiben 2 zusätzlich an den peripheren Oberflächen mittels einer faserverstärkten Bandage 4 gesichert. Die Bandage 4 wird unter Verwendung nahezu unelastischer Fasern (z.B. Kunst-, Natur- Kohle- oder Glasfaser) erzeugt und vorzugsweise aus demselben Material wie die Trägerschicht 21 gefertigt, wobei sie als umlaufende Schlauchhülle an das Umfangsmaß der Rotorscheiben 2 angepasst ist und gegebenenfalls nach dem Aufziehen noch thermisch geschrumpft werden kann.

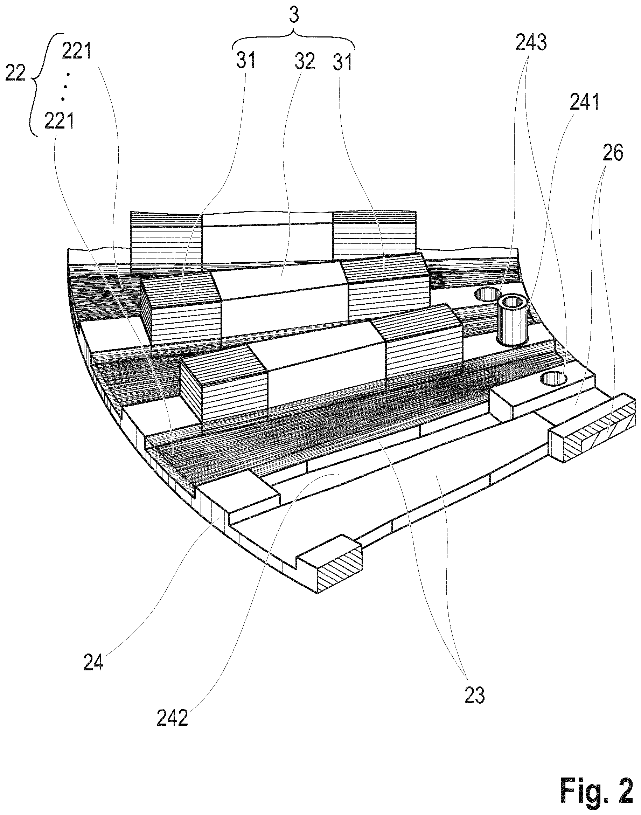

Für eine erste Ausführung der erfindungsgemäßen Rotorscheibe 2 sind in Fig. 2 bis Fig. 4 die grundsätzlichen Komponenten dargestellt und der herstellungstechnische Ablauf der Aufschichtung der Komponenten der Rotorscheibe 2 ersichtlich.

Die Herstellung einer Rotorscheibe 2 beginnt mit einer Positionierschablone 24, in die nachfolgend die jeweils erforderlichen Funktionselemente 3 in Form von magnetischen oder magnetisierbaren Polen 31 eingesetzt werden. Weiterführend kann die Positionierschablone 24 die Funktionselemente 3 bereits eingegossen enthalten, wofür dann eine Urform zur Ausrichtung der Funktionselemente 3 vor dem Eingießen oder Einspritzen der Positionierungsschablone 24 für die exakte Positionierung der magnetischen Funktionselemente 3 sorgt. Bei beiden Vorgehensweisen kann die Positionierschablone 24 für alle nachfolgenden Schritte in einer Werkzeugkavität (nicht dargestellt) eingelassen sein, um später das Füllen der Faserschichten mit dem Matrixmaterial 25 einfach bewerkstelligen zu können
Der in radialer Richtung zwischen zwei benachbarten Polen 31 liegende Steg 23 der Rotorscheibe 2 wird umlaufend zwischen allen Polen 31 mit Faserspeichen 221 unter Verwendung radial ausgerichteten Fasermaterials belegt. Die dadurch erzeugte Verstärkerschicht 22 erstreckt sich zumindest in der Verlängerung der Stege 23 vom freigelassenen Innenkreis 211 bis Peripherie der Rotorscheibe 2. Zwischen den Faserspeichen 221 können aber auch Füllelemente aus radial ausgerichtetem Fasermaterial mit der Breite der Funktionselemente 3 eingefügt sein, um eine Schicht einheitlicher Dicke zu erhalten. Danach wird die Trägerschicht 21 um die Pole 31 und über die Verstärkerschicht 22 gelegt. Besonders vorteilhaft ist diese Trägerschicht 21 aus Glasgewebe aufgebaut, mittels Binder fixiert und anschließend die Polaussparungen z. B. mittels Ausstanzen, Laser- oder Wasserstrahlschneiden eingebracht. Dieser Preform wird anschließend über den bereits vorhandenen Aufbau aus Positionierschablone 24 und Verstärkerschicht 22 in der Werkzeugkavität gelegt bzw. eingepasst.
Weiterführend werden in diesem Beispiel auf eine zweite Positionierschablone 24 in gleicher Art und Weise radiale Faserspeichen 221 zur Erzeugung einer zweiten radialen Verstärkerschicht 22 aufgelegt, um anschließend den gewünschten axial spiegelsymmetrischen Schichtaufbau der Rotorscheibe 2 zusammenzusetzen.
Dieser Verfahrenschritt des Zusammensetzens kann innerhalb oder außerhalb einer Werkzeugkavität erfolgen. Erfolgt dieser Schritt außerhalb einer Kavität, muss der Schichtaufbau nachfolgend in eine Werkzeugkavität (nicht dargestellt) eingelegt werden, um ihn mit Matrixmaterial 25 füllen zu können. Die Werkzeugkavität ist dabei in den seltensten Fällen eine reine Kavität, sondern vielmehr ein komplexeres Gebilde, das dafür ausgebildet ist, dass für das Matrixmaterial 25 mit einem Druckgefälle, d. h. einer Druckdifferenz entweder mit Unterdruck (Vakuum) in der Werkzeugkavität oder Überdruck in einem Reservoir zur Bereitstellung des Matrixmaterials 25, in den Faserschichtaufbau eingebracht und gegebenenfalls zwischen zwei Werkzeugstempeln komprimiert wird. Anschließend kann das Matrixmaterial 25 mittels eines RTM-Verfahrens (Resin Transfer Moulding) oder beliebiger anderer Druckgradientenverfahren infiltriert oder getränkt werden, bei denen das Matrixmaterial 25 in die Werkzeugkavität eingesogen, in diese injiziert (eingepresst) oder eingefüllt, eingegossen und gegebenenfalls noch nachträglich gepresst (verdichtet) wird.
Nach der Härtung des Matrixmaterials 25 wird die Rotorscheibe 2 aus der Werkzeugkavität entnommen und erfährt eine mechanische Endbearbeitung zur finalen geometrischen Endform, die im Wesentlichen aus Schleif- und Polierprozessen besteht, um das benötigte Endmaß der Rotorscheibe 2 für den Einbau zwischen die Polschuhe des Stators herzustellen.

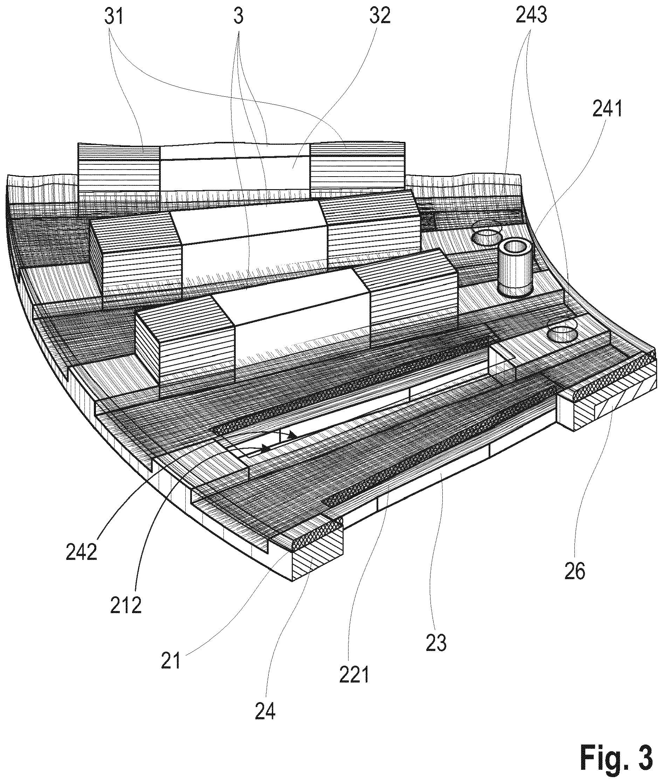

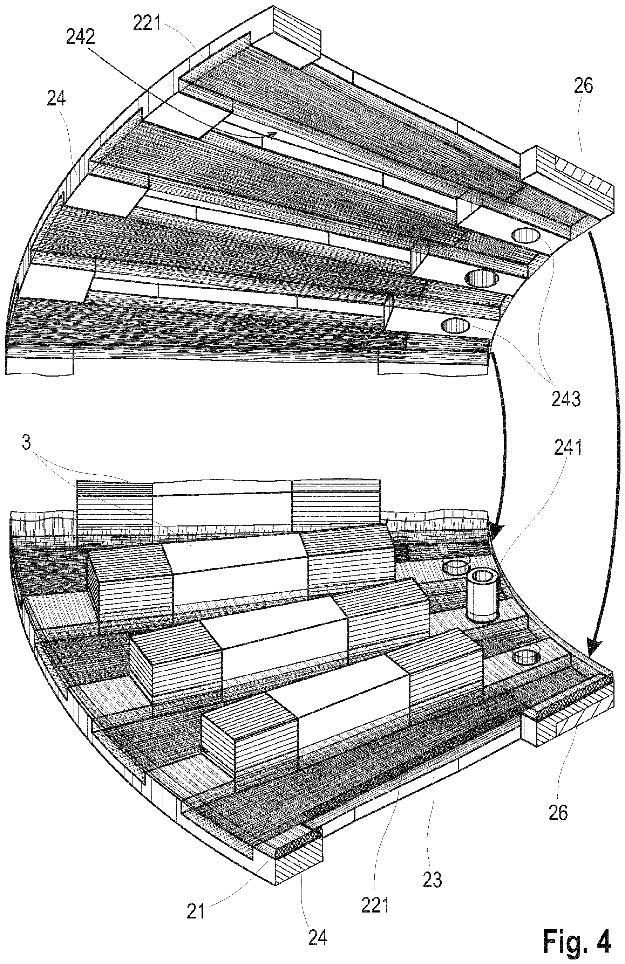

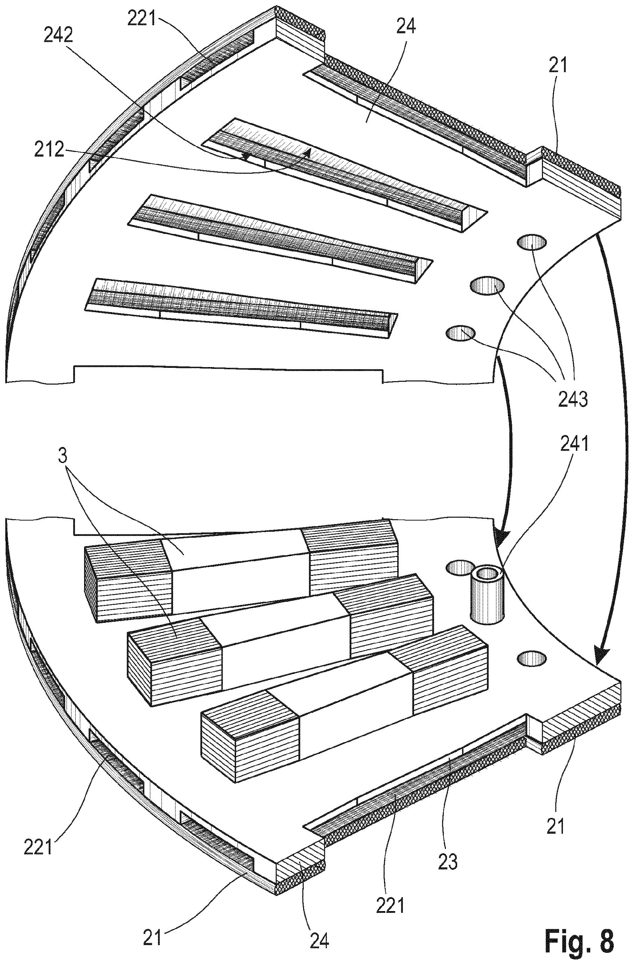

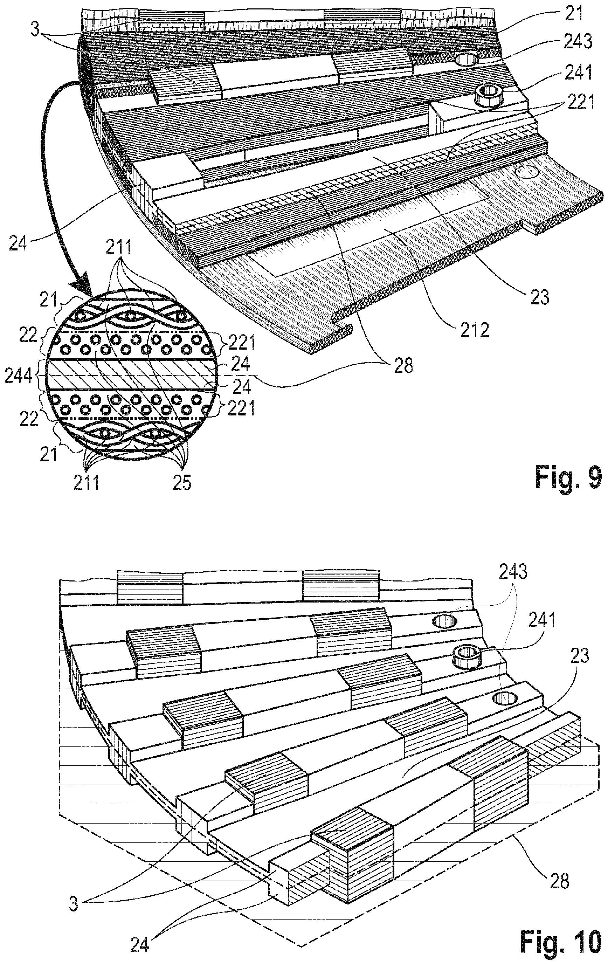

In Fig. 2 ist zur Illustration der Herstellung ein Sektorausschnitt der Rotorscheibe 2 in einer perspektivischen Darstellung nach dem Verfahrensschritt des Einlegens der Funktionselemente 3 und der Verstärkerschicht 22 (hier ausschließlich mit Faserspeichen 221 zwischen den Stegen 23) in die Positionierschablone 24 gezeigt. In diesem Fall sind in der Positionierschablone 24 die radialen Füllelemente zwischen den Faserspeichen 221 bereits in der Positionierschablone 24 vorgeformt. Des Weiteren sind in diesen Bereichen am freigelassenen Innenkreis 211 Justierhülsen 241 sowie Montagebohrungen 243 eingelassen, die zugleich durch den Montagering 26 durchgeführt sind. In die Ausnehmungen 242 der Positionierschablone 24 sind in diesem Beispiel Funktionselemente 3 mit magnetisierbaren Polen 31 und einem elektrisch nichtleitenden Zwischenstück 32 eingesetzt. Dieser Aufbau wird nun gemäß Fig. 3 mit einer Trägerschicht 21 fortgesetzt, die die radiale Verstärkerschicht 22 mindestens mit tangential ausgerichteten Fasern verstärkt, wobei jedoch die Trägerschicht 21 grundsätzlich eine zweidimensionale Faserstruktur aufweist.
Der so entstandene Schichtaufbau der Rotorscheibe 2 kann nun in zwei Richtungen symmetrisch vervollständigt werden: Einerseits gemäß Fig. 4 bis 7, bei denen eine Symmetrieebene 27 mittig innerhalb der Trägerschicht 21 liegt, an der beidseitig Verstärkerschichten 22 und Positionierschablonen 24 durch das Matrixmaterial 25 stoffschlüssig verbunden sind, und andererseits gemäß Fig. 8 und 9, bei denen eine Symmetrieebene 28 zwischen zwei mit ihren Planseiten aneinanderliegenden Positionierschablonen 24 angeordnet ist, an die beidseitig Verstärkerschichten 22 und Trägerschichten 21 mittels des Matrixmaterials 25 befestigt sind.
Eine weitere Abwandlung der letzteren Variante stellt Fig. 10 dar, bei der die zwei aneinandergefügten einzelnen (einseitig ebenen) Positionierschablonen 24 in einem beidseitig geformten Positionierkörper 244 zusammengefasst (vereinigt) sind. Dabei soll der beidseitig geformte Positionierkörper 244 - obwohl er einstückig ausgeführt ist - im Kontext der Erfindung stets als mit zwei Positionierschablonen 24 ausgestattet verstanden werden, da beide geformten Oberflächen des Positionierkörpers 244 strukturierte Bereiche zur Positionierung von Funktionselementen 3, Träger- und Verstärkerschichten 21 bzw. 22 bereitstellen, also jede Seite für sich die Schablonenfunktion für die Positionierung erfüllt.
Die drei vorgenannten Varianten werden nachfolgend noch im Einzelnen beschrieben.

Bei der in Fig. 3 gewählten perspektivischen Darstellung ist - wie in den nachfolgenden Figuren aus Gründen der Übersichtlichkeit - lediglich ein Sektor einer Rotorscheibe 2 gezeichnet. Dieser Sektor hat auf der strukturiert ausgeformten Positionierschablone 24 vier gezeichnete Ausnehmungen 242, in dreien von denen sich ein magnetisches Funktionselement 3 befindet. Dazwischen sind in den Bereichen der Stege 23, d.h. in den zwischen den Funktionselementen 3 radial ausgerichteten Stegen 23, jeweils Faserspeichen 221 mit radial ausgerichteten Fasern, die von der Peripherie der Rotorscheibe 2 bis zum freigelassenen Innenkreis 211 reichen. Zum axialen und tangentialen Ausrichten der Rotorscheibe 2 weist die Positionierschablone 24 eine Justierhülse 241 auf, mit der zunächst die zwei gegenüberliegenden Positionierschablonen 24 (nur in Fig. 4 bis 6 sichtbar) der Rotorscheibe 2 zueinander justiert werden.
Der Schichtaufbau der Rotorscheibe 2- in Zusammenschau mit den Fig.4-6 - zeigt eine erste Ausführungsform der Rotorscheibe 2, in der die Trägerschicht 21 zentral zwischen zwei Verstärkerschichten 22 und außen anschließenden Positionierschablonen 24 angeordnet sind. Nach dem Einlegen der Faserspeichen 221 in die abgesenkten Stege 23 zwischen allen Funktionselementen 3, wird auf die so entstehende Verstärkerschicht 22 anschließend die Trägerschicht 21 aufgelegt, bevor die spiegelsymmetrisch ausgerichtete obere Positionierschablone 24, die ebenfalls mit der Verstärkerschicht 22 belegt worden ist, invers aufgelegt (eingepasst) wird. Dabei leistet die Justierhülse 241 im Zusammenspiel mit den Funktionselementen 3 die passgenaue Vorgabe zum Zusammensetzen der Rotorscheibe 2. Für die Montage der Rotorscheibe 2 durch einen Positionsstift an der Motorwelle 12 (in Fig. 3, 4 nicht gezeichnet), gestattet die Justierhülse 241 zusätzlich zur Justagefunktion auch die Verspannung der Rotorscheibe 2 mit einem Flansch der Motorwelle 12.

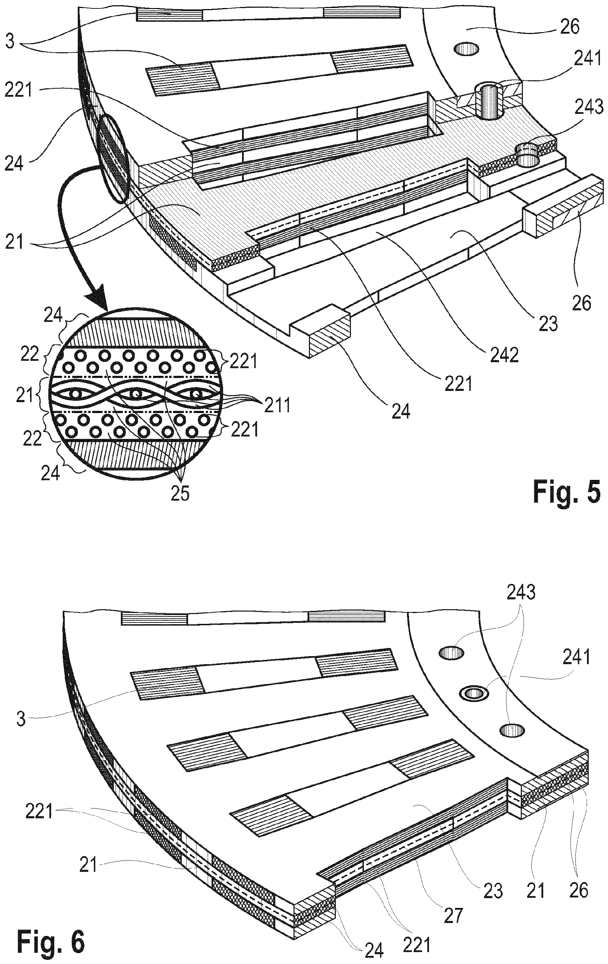

Fig. 5 zeigt gegenüber Fig. 4 einen Sektor der Rotorscheibe 2 im fertiggestellten Zustand. Dazu verdeutlicht die kleine Detaildarstellung von Fig. 5 den für dieses erste Ausführungsbeispiel realen Schichtaufbau. Zwischen den zwei Positionierschablonen 24 sind je Steg 23 eingelegte radiale Faserspeichen 221 sichtbar, die beidseitig an der Trägerschicht 21 - hier als Zentral- bzw. Kernschicht der Rotorscheibe 2 - anliegen. Dabei sind die Fasern der in den Faserspeichen 221 der Verstärkerschicht 22 ausschließlich radial in der Rotorscheibe 2 ausgerichtet, während die Trägerschicht 21 eine (beispielsweise zweidimensional verwobene) Schicht ist.

Fig. 6 zeigt denselben Sektor der Rotorscheibe 2, allerdings mit nachträglich weitgehend abgetragenen Positionierschablonen 24, um die Masse der Rotorscheibe 2 weiter zu reduzieren. Bei dieser Variante der Erfindung wird von der Möglichkeit Gebrauch gemacht, die beidseitig außen liegenden Positionierschablonen 24 fast vollständig mechanisch abzutragen (abzuschleifen), sodass praktisch eine reine Faser-Verbund-Kunststoff-Rotorscheibe vorliegt. Vorteilhaft daran ist, dass eine besonders dünne Rotorscheibe 2 vorliegt, die die Baulänge eines aus mehreren Rotorscheiben 2 konfektionierten Motors 1 verkürzt und außerdem weiteres Gewicht einspart, ohne dass die Fliehkraftsicherung der Funktionselemente 3 dadurch beeinträchtigt wird.

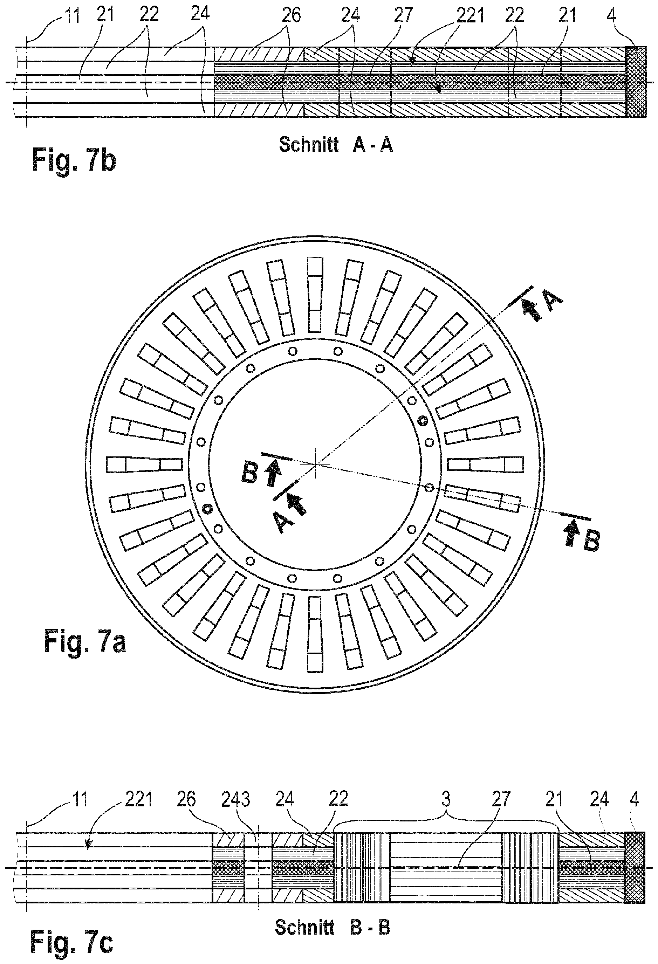

In Fig. 7 ist die Rotorscheibe 2 - gemäß der in Fig. 5 dargestellten und erläuterten Ausführung des erfindungsgemäßen Verfahrens - in einer Draufsicht und zwei Axialschnitten gezeigt. Dazu zeigt Fig. 7a die Auswahl der Schnitte entlang eines radialen Steges 23 (Schnitt A-A) sowie durch ein Funktionselement 3 (Schnitt B-B).

Beginnend mit Fig. 8 ist eine andere Ausführung der erfindungsgemäßen Rotorscheibe 2 dargestellt, die den grundsätzlichen spiegelsymmetrischen Schichtaufbau beibehält. In Fig. 8 ist die ausgehend von der ausgeführten Schrittfolge gemäß Fig. 4. andersartig symmetrisch zusammengestellte Rotorscheibe 2 als aufgeklapptes Rotorsegment gezeigt. In diesem Beispiel liegt die Symmetrieebene 28 der Rotorscheibe 2 in der Kontaktfläche zwischen zwei aneinander anliegenden Positionierschablonen 24, deren strukturierte Schablonenflächen nach außen weisen.
Bei dieser Ausführung der Rotorscheibe 2 beginnt die Montage wiederum mit dem Einlegen der Faserspeichen 221 in die Bereiche der Stege 23 der Positionierschablonen 24. Auch hier werden jeweils die Faserspeichen 221 mit einer Trägerschicht 21 in Kontakt gebracht, wobei allerdings zwei Schichtaufbauten mit jeweils Positionierschablone 24, Verstärkerschicht 22 und Trägerschicht 21 erzeugt, mit den ebenen Flächen der Positionierschablonen 24 zusammengebracht werden und der so zusammengefügte symmetrische Schichtaufbau und dessen Faserzwischenräume mit dem Matrixmaterial 25 gefüllt und ausgehärtet wird.

Fig. 9 symbolisiert in einer gestuften Sektorschnittdarstellung den Zusammenbau der Rotorscheibe 2 gemäß der Verfahrensweise von Fig. 8. Die zwei Positionierschablonen 24 stehen mit ihren ebenen Flächen in direktem Kontakt zueinander, wobei in der Kontaktebene der beiden Positionierschablonen 24 eine Symmetrieebene 28 liegt, wie sie in Fig. 10 noch deutlicher eingezeichnet ist. Von dieser Symmetrieebene 28 ausgehend, schließen sich an die Positionierschablonen 24 beidseitig nach außen die Verstärkerschichten 22 und die Trägerschichten 21 an. Dabei bilden die in diesem Fall zwei Trägerschichten 21 den äußeren Abschluss der Rotorscheibe 2.

Fig. 9 stellt zusätzlich zum zusammengefügten Endzustand des Zusammenbaus gemäß Fig. 8 zu einer flachen Rotorscheibe 2 noch einen vergrößerten Detailausschnitt der Folge der Schichten dar, bei dem die aus einem Kunststoff oder einer Keramik bestehenden Positionierschablonen 24 lückenlos spiegelsymmetrisch angeordnet sind und einen doppelseitigen Verbund von Positionierschablonen 24 bilden, der mittig von der Symmetrieebene 28 durchzogen ist. Von der Symmetrieebene 28 ausgehend wird der so erzeugte zweiseitige Schablonenkörper beidseitig von den rein radial ausgerichteten Fasern der Verstärkerschicht 22 sowie von den radial und tangential orientierten Fasern der Trägerschicht 21 eingefasst.

In Fig. 10 ist noch eine gegenüber der Ausführung gemäß den Fig. 8 und 9 modifizierte Variante der Rotorscheibe 2 durch Vereinigung der zwei Positionierschablonen 24 zu einem beidseitig mit je einer Positionierschablone 24 "geprägten" Schablonenkörper 244 gezeigt, ohne dass die weiteren Schichten, wie sie in Fig. 9 dargestellt sind, nochmals eingezeichnet wurden. Diese würden sich in gleicher Weise, wie in Fig. 9 dargestellt, anschließen.
Im Sinne der Erfindung wird der Schablonenkörper 244 als ein einstückiger Festkörper mit zwei Positionierschablonen 24 aufgefasst, da jede strukturiert geformte Oberfläche für sich die erforderliche Schablonenfunktion für die Faserspeichen 221 der jeweiligen Verstärkerschicht 22 sowie die Positionierungsfunktion für die jeweils außen anschließende Trägerschicht 21 vermittels der in den Schablonenkörper 244 eingesetzten oder eingegossenen magnetischen Funktionselemente 3 aufweist.

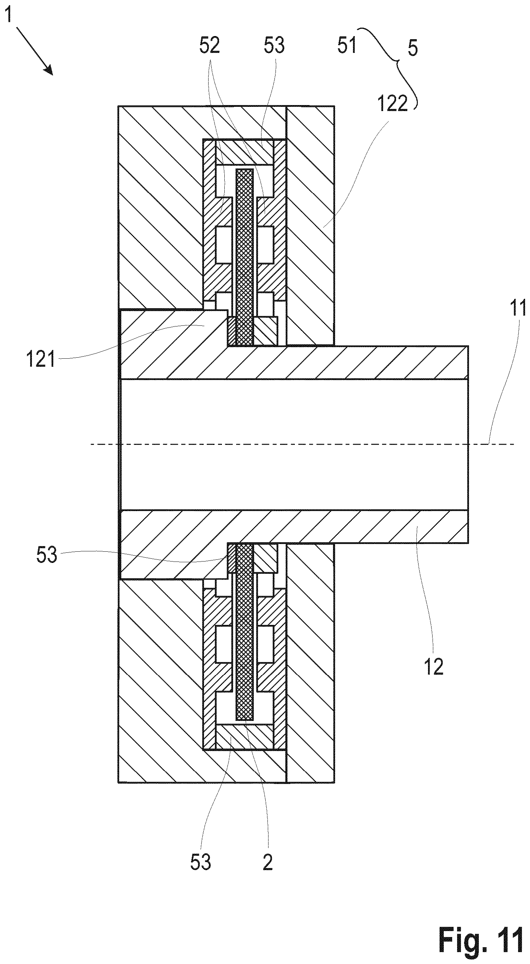

In Fig. 11 ist ein Axialschnitt eines kompletten Motors, der genau eine erfindungsgemäße Rotorscheibe 2 aufweist, dargestellt. Hier ist ersichtlich, dass die Rotorscheibe 2 an einem Wellenflansch 121 der als Hohlwelle ausgebildeten Motorwelle 12 befestigt ist und ein Motorgehäuse 5 aus Gehäusekappe 51 und Lagerschild 122 einen Stator 52 mit U-förmigen Magnetpolschuhen trägt, der beidseitig die Rotorscheibe 2 mit einem geringen Luftspalt einschließt. Der beidseitige Luftspalt wird dabei durch einen Distanzring 53 eingestellt

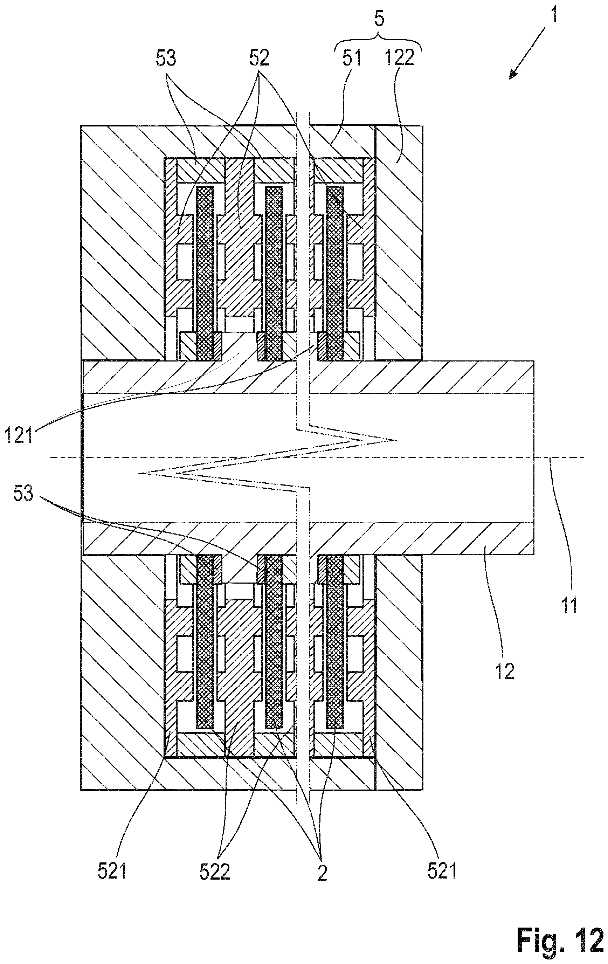

Als Alternative zu Fig. 11 zeigt Fig. 12 einen Motor 1 mit drei oder mehr Rotorscheiben 2, bei dem lediglich die Magnetpolschuhe der beiden äußeren Statoren 521 U-förmig und die Polschuhe der jeweils zwischen zwei Rotorscheiben 2 liegenden inneren Statoren 522 H-förmig ausgebildet sind.

Fig. 13 zeigt noch eine weitere Ausführung der Erfindung, bei der die Rotorscheibe 2 als Außenläufer ausgeführt ist. Anstelle der in Fig. 11 verwendeten Rotorwelle 12 ist hier ein Statordorn 54 (als stationärer Achsstumpf) starr entlang der Motorachse 11 angeordnet, auf dem die Statoren 52 in analoger Weise wie in Fig. 11 befestigt sind. In diesem Fall ist die Rotorgeometrie so gestaltet, dass die Peripherie der Rotorscheibe 2 starr mit dem Motorgehäuse 5 verbunden ist. Gleichbedeutend damit ist, dass die erfindungsgemäße Rotorscheibe 2 an ihrem peripheren Rand im Innern einer Hohlwelle montiert ist. Die dabei einzusetzenden Montageringe 26 (in Fig. 13 nicht dargestellt) sind in diesem Fall an der äußeren Peripherie der Rotorscheibe 2 befestigt. Die Statoren 52 sind in diesem Fall vom Innern des freigelassenen Innenkreises 211 der Rotorscheibe 2 aus zu beiden Seiten der Rotorscheibe 2 gehaltert.

Das erfindungsgemäße Verfahren und die erfindungsgemäßen Vorrichtungen sind bei allen transversalfeld-erregten elektrischen Maschinen verwendbar. Die Anwendung richtet sich vorzugsweise auf TF-Reluktanzmaschinen und ermöglicht Motorkonstruktionen mit hohen Drehmomenten in extremer Leichtbauweise.

### Bezugszeichenliste

- 1: Motor
- 11: Motordrehachse
- 12: Motorwelle
- 121: Wellenflansch
- 122: Lagerschild
- 2: Rotorscheibe
- 21: Trägerschicht
- 211: freigelassener Innenkreis
- 212: Ausnehmungen (für Funktionselemente in der Trägerschicht)
- 22: (radiale) Verstärkerschicht
- 221: Faserspeiche
- 23: Steg
- 24: Positionierschablone
- 241: Justierhülse
- 242: Ausnehmung (für Funktionselemente in der Positionierschablone)
- 243: Montagebohrungen
- 244: Schablonenkörper
- 25: Matrixmaterial
- 26: Montagering
- 27: Symmetrieebene (in Trägerschicht)
- 28: Symmetrieebene (zwischen Positionierschablonen)
- 29: Faser-Verbund-Kunststoff-System
- 3: Funktionselemente
- 31: Pol
- 32: Verbindungsstück
- 4: Bandage
- 5: Motorgehäuse
- 51: Gehäusekappe (auf Lagerschild 122)
- 52: Stator
- 521: äußere Statoren
- 522: innere Statoren
- 53: Distanzring
- 54: Statordorn

## Patentansprüche

1. Faser-Verbund-Kunststoff-Rotor für eine elektrische transversalfeld-erregte Maschine unter Verwendung mindestens einer Faser-Verbund-Kunststoff-Schicht, in der radial ausgerichtete magnetische Funktionselemente eingebettet sind, wobei der Rotor mindestens eine rotationssymmetrische Rotorscheibe (2) aufweist, die als Faser-Verbund-Kunststoff-Schichtsystem (29) gefertigt ist,
**dadurch gekennzeichnet, dass**
- die Rotorscheibe (2) aus transversal orientierten, symmetrisch zu einer Symmetrieebene (27; 28) angeordneten Schichten aufgebaut ist und die mindestens eine Faser-Verbund-Kunststoff-Schicht eine zweidimensional strukturierte Trägerschicht (21) mit vorwiegend tangential orientierten Fasern aufweist, an der wenigstens eine daran anliegende radiale Verstärkerschicht (22) mit mindestens einer radial geradlinigen Faserausrichtung vorhanden ist,
- die Verstärkerschicht (22) an radiale Stege (23) zwischen den Funktionselementen (3) angepasste flache radiale Faserspeichen (221) aufweist, die von einem freigelassenen Innenkreis (211) bis an die Peripherie der Trägerschicht (21) ausgedehnt sind, und
- mindestens eine Positionierschablone (24) zur definierten Positionierung der Funktionselemente (3) sowie radial geordneten Einlagerung der Faserspeichen (221) der Verstärkerschicht (22) in die Stege (23) zwischen den Funktionselementen (3) mindestens transient vorhanden ist, um die Funktionselemente (3) und die Faserspeichen (221) wenigstens so lange definiert zu fixieren, bis ein zwischen die Fasern von Trägerschicht (21) und Verstärkerschicht (22) eingebrachtes fließfähiges Matrixmaterial (25) ausgehärtet ist.

2. Rotor nach Anspruch 1, **dadurch gekennzeichnet, dass** die Verstärkerschicht (22) als radial verstärktes Fasergewebe ausgebildet ist.

3. Rotor nach Anspruch 1, **dadurch gekennzeichnet, dass** die Positionierschablone (24) aus mindestens einem polymeren Kunststoff besteht.

4. Rotor nach Anspruch 1, **dadurch gekennzeichnet, dass** die Positionierschablone (24) aus einer Oxid-Keramik, insbesondere Aluminiumoxid, besteht.

5. Rotor nach einem der vorhergehenden Ansprüche, **dadurch gekennzeichnet, dass** die magnetischen Funktionselemente (3) in radialer Ausrichtung in Ausnehmungen (212), die in axialer Richtung alle Faser-Verbund-Kunststoff-Schichten (21, 22) der Rotorscheibe (2) mindestens überwiegend durchdringen, eingesetzt sind.

6. Rotor nach Anspruch 1, **dadurch gekennzeichnet, dass** die magnetischen Funktionselemente (3) in radialer Richtung orientierte Pole (31) aufweisen, die entweder aus temporär oder dauerhaft magnetisierbaren oder permanentmagnetischen Materialien gebildet sind, wobei die aus magnetisierbaren Materialien bestehenden Funktionselemente (3) zwischen den Polen (31) ein elektrisch nichtleitendes Zwischenstück (32) zur Poltrennung aufweisen.

7. Rotor nach Anspruch 1, **dadurch gekennzeichnet, dass** die Rotorscheibe (2) eine zentral in der Trägerschicht (21) angeordnete Symmetrieebene (27) aufweist, ausgehend von der die Trägerschicht (21) beidseitig mit je einer Verstärkerschicht (22) und einer Positionierschablone (24) einschlossen ist.

8. Rotor nach Anspruch 1, **dadurch gekennzeichnet, dass** die Rotorscheibe (2) eine Symmetrieebene (28) entlang einer Fügefläche zwischen zwei Positionierschablonen (24) aufweist, wobei beidseitig die Positionierschablonen (24) von je einer Verstärkerschicht (22) und einer Trägerschicht (21) eingeschlossen sind.

9. Verfahren zur Herstellung eines Faser-Verbund-Kunststoff-Rotors gemäß einem der voranstehenden Ansprüche, enthaltend folgende Schritte
a) Bereitstellen mindestens einer Positionierschablone (24) mit passenden Ausnehmungen (242) für magnetische Funktionselemente (3) und eingeformten abgesenkten Stegen (23) zur Aufnahme von radialen Faserspeichen (221),
b) Einbringen der Funktionselemente (3) in die Ausnehmungen (242) der Positionierschablone (24),
c) Einbringen von Fasern zu radialen Faserspeichen (221) in Bereiche der Stege (23) der Positionierschablone (24) zwischen den Funktionselementen (3) zur Erzeugung einer radialen Verstärkerschicht (22) an der Positionierschablone (24),
d) Anlegen mindestens einer Trägerschicht (21) aus zweidimensional strukturiertem Fasermaterial, das Ausnehmungen (212) für die Funktionselemente (3) aufweist, an die mit den Verstärkerschichten (22) belegten Positionierschablonen (24),
e) Zusammenfügen eines symmetrischen Schichtaufbaus aus mindestens einer Positionierschablone (24), wenigstens einer Trägerschicht (21) und mindestens einer Verstärkerschicht (22), wobei entweder die Trägerschicht (21) oder die Positionierschablone (24) in einer Symmetrieebene (27) der Rotorscheibe (2) liegt, die Verstärkerschicht (22) und die Trägerschicht (21) direkt aufeinanderfolgend positioniert sind und die radialen Faserspeichen (221) der Verstärkerschicht (22) zusammen mit den magnetischen Funktionselementen (3) in der Positionierschablone (24) für eine genaue Lageausrichtung aufgenommen werden, sodass bezüglich einer Symmetrieebene (27) Verstärkerschichten (22) jeweils zwischen Trägerschicht (21) und Positionierschablone (24) angeordnet sind, und
f) Einbringen eines fließfähigen, aushärtbaren Matrixmaterials (25) in alle Faserschichten (21, 22) der Rotorscheibe (2), während diese in einer axial pressbaren Werkzeugkavität liegt, und Erzeugung einer Faser-Kunststoff-Verbund-Rotorscheibe (2) durch Aushärten des Matrixmaterials (25).

10. Verfahren nach Anspruch 9, wobei zwei Positionierschablonen (24), die jeweils mit magnetischen Funktionselementen (3), radialen Faserspeichen (221) und einer Trägerschicht (21) versehen werden, spiegelsymmetrisch invers zusammengefügt werden.

11. Verfahren nach Anspruch 9 oder 10, wobei das Einbringen der radialen Faserspeichen (221) in Bereiche der Stege (23) zwischen den Funktionselementen (3) durch radiales Ablegen von einzelnen Fasern, Faserbündeln oder von vorgefertigten Radialfaserelementen mit einer aus den Technologien Legen, Wickeln oder Tapelegen erfolgt.

12. Verfahren nach einem der Ansprüche 9 bis 11, wobei das Einbringen des Matrixmaterials (25) mittels Durchtränken aller auf den Positionierschablonen (24) gestapelten Schichten in einer geschlossenen Werkzeugkavität mit dem Matrixmaterial (25) mittels eines Druckgradientenverfahrens, durch Gießen oder Injizieren von flüssigem oder verflüssigtem polymerem Kunststoff als Gemisch aus Harz und Härter oder als Schmelze zwischen den Fasern der auf den Positionierschablonen (24) liegenden Träger- und Verstärkerschichten (21; 22) erfolgt.

13. Verfahren nach einem der Ansprüche 9 bis 11, wobei das Einbringen des Matrixmaterials (25) durch Verflüssigen von polymerem Kunststoff, der in den auf den Positionierschablonen (24) liegenden Fasern der Träger- und Verstärkerschichten (21; 22) nach dem Prepreg-Verfahren vorimprägniert war, Durchtränken mit dem verflüssigten Kunststoff und Heißpressen in der Werkzeugkavität erfolgt.

14. Verfahren nach einem der Ansprüche 9 bis 13, wobei nach dem Aushärten des Matrixmaterials (25) mindestens ein Teil der Positionierschablonen (24) durch Planschleifen, -drehen oder -fräsen abgetragen wird.

15. Verfahren nach einem der Ansprüche 9 bis 14, wobei die Rotorscheibe (2) tangential mit einer Bandage (4) ummantelt wird, die als Faser-Verbund-Kunststoff-Schicht mit tangential verlaufenden Fasern erzeugt wird.

## Claims

1. A fibre-composite plastic rotor for a transverse field excited electric machine using at least one fibre-composite plastic layer, in which radially oriented magnetic functional elements are embedded, wherein
the rotor has at least one rotationally symmetric rotor disc (2) which is produced as a fibre-composite plastic layer system (29),
**characterised in that**
- the rotor disc (2) is constructed from transversely oriented layers arranged symmetrically to a plane of symmetry (27; 28) and the at least one fibre-composite plastic layer has a two-dimensionally structured carrier layer (21) with predominantly tangentially oriented fibres, on which there is at least one radial reinforcing layer (22) resting thereon with at least one radially rectilinear fibre orientation,
- the reinforcing layer (22) has flat radial fibre spokes (221) adapted to radial webs (23) between the functional elements (3), which are extended from an exposed inner circle (211) to the periphery of the carrier layer (21), and
- at least one positioning template (24) for the defined positioning of the functional elements (3) and radially ordered insertion of the fibre spokes (221) of the reinforcing layer (22) into the webs (23) between the functional elements (3) is present at least transiently in order to fix the functional elements (3) and the fibre spokes (221) in a defined manner at least until a flowable matrix material (25) introduced between the fibres of the carrier layer (21) and the reinforcing layer (22) is cured.

2. The rotor according to claim 1, **characterised in that** the reinforcing layer (22) is provided as a radially reinforced woven fabric.

3. The rotor according to claim 1, **characterised in that** the positioning template (24) consists of at least one polymeric plastic.

4. The rotor according to claim 1, **characterised in that** the positioning template (24) consists of an oxide ceramic, in particular aluminium oxide.

5. The rotor according to any one of the preceding claims, **characterised in that** the magnetic functional elements (3) are inserted in radial alignment in recesses (212) which at least predominantly penetrate all fibre-composite plastic layers (21, 22) of the rotor disc (2) in the axial direction.

6. The rotor according to claim 1, **characterised in that** the magnetic functional elements (3) have poles (31) oriented in the radial direction, which are formed either from temporarily or permanently magnetizable or permanently magnetic materials, wherein the functional elements (3) consisting of magnetizable materials have an electrically non-conductive intermediate piece (32) between the poles (31) for pole separation.

7. The rotor according to claim 1, **characterised in that** the rotor disc (2) has a plane of symmetry (27) arranged centrally in the carrier layer (21), starting from which the carrier layer (21) is enclosed on both sides by a reinforcing layer (22) and a positioning template (24) respectively.

8. The rotor according to claim 1, **characterised in that** the rotor disc (2) has a plane of symmetry (28) along a joining surface between two positioning templates (24), the positioning templates (24) being enclosed on both sides by a reinforcing layer (22) and a carrier layer (21) respectively.

9. A method of producing a fiber-composite plastic rotor according to any one of the preceding claims, comprising the steps of:
a) providing at least one positioning template (24) with matching recesses (242) for magnetic functional elements (3) and moulded-in lowered webs (23) for receiving radial fibre spokes (221),
b) inserting the functional elements (3) into the recesses (242) of the positioning template (24),
c) introducing fibres to form radial fibre spokes (221) in regions of the webs (23) of the positioning template (24) between the functional elements (3) to produce a radial reinforcing layer (22) on the positioning template (24),
d) applying at least one carrier layer (21) of two-dimensionally structured fibre material, which has recesses (212) for the functional elements (3), to the positioning templates (24) covered with the reinforcing layers (22),
e) assembling a symmetrical layered structure comprising at least one positioning template (24), at least one carrier layer (21) and at least one reinforcing layer (22), wherein either the carrier layer (21) or the positioning template (24) lies in a plane of symmetry (27) of the rotor disc (2), the reinforcing layer (22) and the carrier layer (21) are positioned directly succeeding each other and the radial fibre spokes (221) of the reinforcing layer (22) together with the magnetic functional elements (3) are received in the positioning template (24) for precise positional alignment, so that, with respect to a plane of symmetry (27), reinforcing layers (22) are each arranged between the carrier layer (21) and the positioning template (24), and
f) introducing a flowable, curable matrix material (25) into all fibre layers (21, 22) of the rotor disc (2) while the latter lies in an axially pressable mould cavity, and producing a fibre-plastic composite rotor disc (2) by curing the matrix material (25).

10. The method according to claim 9, wherein two positioning templates (24), which are each provided with magnetic functional elements (3), radial fibre spokes (221) and a carrier layer (21), are joined together in a mirror-symmetrically inverted manner.

11. The method according to claim 9 or 10, wherein the radial fibre spokes (221) are introduced into regions of the webs (23) between the functional elements (3) by radial deposition of individual fibres, fibre bundles or prefabricated radial fibre elements using one of the technologies of laying, winding or tape laying.

12. The method according to any one of claims 9 to 11, wherein the matrix material (25) is introduced by impregnating all layers stacked on the positioning templates (24) in a closed mould cavity with the matrix material (25) by means of a pressure gradient method, by casting or injecting liquid or liquefied polymeric plastic as a mixture of resin and hardener or as a melt between the fibres of the carrier and reinforcing layers (21; 22) lying on the positioning templates (24).

13. The method according to any one of claims 9 to 11, wherein the matrix material (25) is introduced by liquefying polymeric plastic, which was pre-impregnated in the fibres of the carrier and reinforcing layers (21; 22) lying on the positioning templates (24) according to the pre-preg process, impregnating with the liquefied plastic and hot pressing in the mould cavity.

14. The method according to any one of claims 9 to 13, wherein, after curing of the matrix material (25), at least some of the positioning templates (24) are removed by face grinding, turning or milling.

15. The method according to any one of claims 9 to 14, wherein the rotor disc (2) is tangentially encased with a bandage (4) which is produced as a fiber-composite plastic layer with tangentially extending fibers.

## Revendications

1. Rotor composite fibre/plastique pour une machine électrique à excitation de champ transversal utilisant au moins une couche en matériau composite fibre/plastique dans laquelle sont noyés des éléments fonctionnels magnétiques orientés radialement, où
le rotor comporte au moins un disque de rotor (2) à symétrie de rotation qui est fabriqué sous la forme d'un système de couches en matériau composite fibre/plastique (29),
**caractérisé en ce que**
- le disque de rotor (2) est constitué de couches orientées transversalement et disposées symétriquement par rapport à un plan de symétrie (27 ; 28) et ladite au moins une couche en matériau composite fibre/plastique présente une couche de support (21) structurée en deux dimensions avec des fibres orientées principalement tangentiellement, sur laquelle se trouve au moins une couche de renforcement radiale (22) avec au moins une orientation de fibres radialement rectiligne qui lui est adjacente,
- la couche de renforcement (22) comporte des rayons de fibres radiaux plats (221) adaptés à des âmes radiales (23) entre les éléments fonctionnels (3), qui s'étendent d'un cercle intérieur exposé (211) à la périphérie de la couche de support (21), et
- au moins un gabarit de positionnement (24) pour le positionnement défini des éléments fonctionnels (3) ainsi que l'insertion radialement ordonnée des rayons de fibres (221) de la couche de renforcement (22) dans les âmes (23) entre les éléments fonctionnels (3) est présent au moins temporairement pour fixer les éléments fonctionnels (3) et les rayons de fibres (221) de manière définie au moins jusqu'à ce qu'un matériau de matrice (25) fluide inséré entre les fibres de la couche de support (21) et de la couche de renforcement (22) ait durci.

2. Rotor selon la revendication 1, **caractérisé en ce que** la couche de renforcement (22) est réalisée sous forme d'un tissu de fibres renforcé radialement.

3. Rotor selon la revendication 1, **caractérisé en ce que** le gabarit de positionnement (24) est constitué d'au moins un plastique polymère.

4. Rotor selon la revendication 1, **caractérisé en ce que** le gabarit de positionnement (24) est constitué d'une céramique d'oxyde, notamment d'oxyde d'aluminium.

5. Rotor selon l'une quelconque des revendications précédentes, **caractérisé en ce que** les éléments fonctionnels magnétiques (3) sont insérés en alignement radial dans des évidements (212) qui pénètrent au moins principalement en direction axiale dans toutes les couches en matériau composite fibre/plastique (21, 22) du disque de rotor (2).

6. Rotor selon la revendication 1, **caractérisé en ce que** les éléments fonctionnels magnétiques (3) présentent des pôles (31) orientés en direction radiale, qui sont formés soit de matériaux magnétisables temporairement ou en permanence, soit de matériaux magnétiques en permanence, les éléments fonctionnels (3) constitués de matériaux magnétisables présentant une pièce intermédiaire (32) non conductrice de l'électricité entre les pôles (31) pour la séparation des pôles.

7. Rotor selon la revendication 1, **caractérisé en ce que** le disque de rotor (2) présente un plan de symétrie (27) disposé centralement dans la couche de support (21), à partir duquel la couche de support (21) est entourée des deux côtés par une couche de renforcement (22) et un gabarit de positionnement (24) respectivement.

8. Rotor selon la revendication 1, **caractérisé en ce que** le disque de rotor (2) présente un plan de symétrie (28) le long d'une face de jointage entre deux gabarits de positionnement (24), les gabarits de positionnement (24) étant entourés des deux côtés par une couche de renforcement (22) et une couche de support (21) respectivement.

9. Procédé de fabrication d'un rotor composite fibre/plastique selon l'une quelconque des revendications précédentes, comprenant les étapes de
a) mise à disposition d'au moins un gabarit de positionnement (24) avec des évidements correspondants (242) pour les éléments fonctionnels magnétiques (3) et des âmes baissées moulées (23) pour recevoir des rayons radiaux en fibre (221),
b) insertion des éléments fonctionnels (3) dans les évidements (242) du gabarit de positionnement (24),
c) introduction de fibres pour former des rayons de fibres radiales (221) dans des régions des âmes (23) du gabarit de positionnement (24) entre les éléments fonctionnels (3) pour produire une couche de renforcement radiale (22) sur le gabarit de positionnement (24),
d) application d'au moins une couche de support (21) en matériau fibreux à structure bidimensionnelle, qui présente des évidements (212) pour les éléments fonctionnels (3), sur les gabarits de positionnement (24) recouverts des couches de renforcement (22),
e) assemblage d'une structure stratifiée symétrique comprenant au moins un gabarit de positionnement (24), au moins une couche de support (21) et au moins une couche de renforcement (22), dans lequel soit la couche de support (21) soit le gabarit de positionnement (24) se trouve dans un plan de symétrie (27) du disque de rotor (2), la couche de renforcement (22) et la couche de support (21) sont positionnées directement l'une après l'autre et les rayons de fibres radiaux (221) de la couche de renforcement (22) sont reçus avec les éléments fonctionnels magnétiques (3) dans le gabarit de positionnement (24) pour un alignement de position précis, de sorte que, par rapport à un plan de symétrie (27), des couches de renforcement (22) sont chacune disposées entre la couche de support (21) et le gabarit de positionnement (24), et
f) introduction d'un matériau de matrice (25) fluide et durcissable dans toutes les couches de fibres (21, 22) du disque de rotor (2) alors que ce dernier se trouve dans une cavité de moule pouvant être pressée axialement, et production d'un disque de rotor (2) composite fibre-plastique par durcissement du matériau de matrice (25).

10. Procédé selon la revendication 9, dans lequel deux gabarits de positionnement (24), chacun pourvu d'éléments fonctionnels magnétiques (3), de rayons de fibres radiaux (221) et d'une couche de support (21), sont reliés entre eux à symétrie miroir inverse.

11. Procédé selon la revendication 9 ou 10, dans lequel les rayons de fibres radiaux (221) sont introduits dans des zones des âmes (23) entre les éléments fonctionnels (3) par dépôt radial de fibres individuelles, de faisceaux de fibres ou d'éléments de fibres radiaux préfabriqués par un procédé choisi parmi les technologies de pose, d'enroulement ou de pose de bandes.

12. Procédé selon l'une quelconque des revendications 9 à 11, dans lequel le matériau de matrice (25) est introduit par imprégnation de toutes les couches empilées sur les gabarits de positionnement (24) dans une cavité de moule fermée par le matériau de matrice (25) au moyen d'un procédé à gradient de pression, en coulant ou en injectant du plastique polymère liquide ou liquéfié en tant que mélange de résine et de durcisseur ou en tant que masse fondue entre les fibres des couches de support et de renforcement (21 ; 22) disposées sur les gabarits de positionnement (24).

13. Procédé selon l'une quelconque des revendications 9 à 11, dans lequel le matériau de matrice (25) est introduit par liquéfaction de plastique polymère qui a été pré-imprégné, selon le procédé de pré-imprégnation, dans les fibres des couches de support et de renforcement (21 ; 22) disposées sur les gabarits de positionnement (24), par imprégnation avec le plastique liquéfié et par pressage à chaud dans la cavité de moule.

14. Procédé selon l'une quelconque des revendications 9 à 13, dans lequel, après le durcissement du matériau de matrice (25), au moins une partie des gabarits de positionnement (24) est enlevée par rectification plane, dressage de face ou fraisage plan.

15. Procédé selon l'une quelconque des revendications 9 à 14, dans lequel le disque de rotor (2) est entouré tangentiellement d'un bandage (4) qui est fabriqué sous la forme d'une couche en matériau composite fibre/plastique avec des fibres s'étendant tangentiellement.
